# DEMANDE DE BREVET EUROPEEN

(11) **EP 4 390 108 A1**
(43) Date de publication de la demande: **26.06.2024**
(21) Numéro de dépôt: 23213637.4
(22) Date de dépôt: 01.12.2023
(51) Int. Cl.: F02K 9/84, C08L 83/04, C08L 83/05, C08L 83/07

(54) **PROCÉDÉ DE PRÉPARATION DE BUTÉES FLEXIBLES POUR PROPULSEURS**

(30) Priorité: 20.12.2022 FR 2213925
(71) Demandeur: ArianeGroup SAS, 78130 Les Mureaux (FR)
(72) Inventeur: SAELEN, Yves, 33127 MARTIGNAS-SUR-JALLE (FR)
(74) Mandataire: Cabinet Beau de Loménie

(57) **Abrégé**

La présente invention concerne un procédé de fabrication de butées flexibles utilisées dans le domaine de la propulsion pour former des articulations reliant une tuyère au corps d'un propulseur, ledit procédé mettant en oeuvre une composition de polysiloxane liquide obtenue par mélange de :
(1) une base polydiméthylsiloxane A ayant un groupe vinyle et un groupe -SiH en bout de chaîne, et une huile polydiméthylsiloxane de formule Si(CH₃)₃-[O-Si(CH₃)₂]ₙ-OSi(CH₃)₃ dans laquelle n varie de 2 à 2 000, avec
(2) un catalyseur polydiméthylsiloxane B ayant des groupes vinyles en bout de chaîne et un catalyseur au platine,

la base polydiméthylsiloxane A, l'huile polydiméthylsiloxane, et le catalyseur polydiméthylsiloxane B étant des matériaux polydiméthylsiloxanes différents, et ladite composition de polysiloxane étant réticulée à température ambiante.

La présente invention vise également une butée flexible pour un propulseur obtenue selon le procédé de l'invention, ainsi qu'un propulseur comprenant un corps prolongé par une tuyère, comprenant une butée flexible selon l'invention.

## Description

### Domaine technique de l'invention

L'invention concerne la réalisation de butées flexibles couramment utilisées dans le domaine de la propulsion pour former des articulations reliant une tuyère au corps d'un propulseur.

### Etat de la technique

Il est courant d'articuler une tuyère d'un propulseur ou moteur-fusée au moyen d'une butée flexible comprenant une structure lamifiée constituée d'une alternance de couches en élastomère et d'armatures rigides réalisées en matériau métallique ou en matériau composite présentant une forme de tronc de sphère. La butée flexible forme ainsi une liaison flexible entre la tuyère et le corps du propulseur de sorte que la tuyère peut être orientée au moyen d'un vérin disposé entre le corps du propulseur et le divergent.

Afin de permettre un mouvement relatif entre la tuyère et le corps du propulseur, la butée flexible doit résister aux sollicitations mécaniques dues à la pression interne tout en restant étanche et sans opposer un couple de résistance excessif.

A ce jour, les butées flexibles pour propulseurs sont majoritairement réalisées à partir de matériaux caoutchouc. Ces matériaux apportent robustesse et reproductibilité aux butées flexibles, et répondent aux besoins des utilisateurs en termes de performances mécaniques finales.

Toutefois, ces matériaux solides présentent des inconvénients en termes de délais et de coûts de mise en oeuvre car ils nécessitent d'être vulcanisés à chaud (~140°C, et pouvant aller jusqu'à ~200°C), et par conséquent exigent des moyens humains et matériels lourds et coûteux, tels que des presses et moules chauffants, très consommateurs en termes d'énergie électrique.

L'invention vise à simplifier la fabrication de butées flexibles en mettant en oeuvre une composition de polysiloxane spécifique liquide capable de réticuler à température ambiante, tout en ayant un niveau de performances mécaniques équivalent à celui des butées flexibles obtenues par vulcanisation à chaud.

L'utilisation de polysiloxane pour fabriquer des butées flexibles est connue de l'art antérieur, mais pas à basse température. La demande EP 3 059 082 A1, par exemple, décrit un procédé de fabrication de butées flexibles à partir de matériaux polysiloxanes nécessitant d'être vulcanisés à des températures proche de 170°C.

Ainsi, les principaux avantages de l'invention sont :
- une simplification globale du procédé de fabrication de butées flexibles, et de sa mise en oeuvre,
- une réduction des coûts de fabrication : réduction des coûts énergétiques (consommation électrique) du fait d'une mise en oeuvre à température ambiante, et une réduction des coûts de matières premières et d'outillages (moules, presse, mélangeur, etc.) (réduction de 50% du coût des moules, par exemple),
- un gain de productivité (forte diminution des temps opératoires), le procédé de l'invention nécessitant peu de moyens humains et matériels (pas de nécessité de presse à injecter, par exemple, dans la mesure où la composition mise en oeuvre est liquide) et faible coût d'entretien du procédé,
- un maintien des performances mécaniques des butées flexibles obtenues par le procédé de l'invention, et
- une capacité de fonctionnement dans une gamme de températures plus large allant de -50°C à +70°C, les compositions existantes ne résistant pas mécaniquement aux températures négatives.

### Résumé de l'invention

La présente invention a pour but de remédier aux inconvénients de l'art antérieur en proposant un procédé de fabrication de butées flexibles pour propulseurs simplifié et peu énergivore en puissance électrique, et par conséquent beaucoup plus économique que les procédés existants, tout en maintenant un niveau de performances mécaniques des butées flexibles équivalent à celui des butées flexibles existantes.

Les inventeurs ont mis en évidence le fait qu'il est possible de réticuler à température ambiante une composition de polysiloxane liquide comprenant une base et un catalyseur polydiméthylsiloxane avec une huile polydiméthylsiloxane spécifique.

Ainsi, selon un premier aspect, l'invention concerne un procédé de fabrication d'une butée flexible pour un propulseur comprenant une étape de préparation d'une composition de polysiloxane spécifique par voie liquide, puis son injection dans un moule et sa réticulation à température ambiante.

Selon un second aspect, l'invention concerne une butée flexible pour un propulseur obtenue selon le procédé de l'invention, comprenant une composition de polysiloxane durcie.

Enfin, selon un dernier aspect, l'invention vise un propulseur comprenant un corps prolongé par une tuyère, comprenant une butée flexible selon l'invention, ladite butée flexible formant une liaison articulée entre la tuyère et le corps du propulseur.

### Brève description des dessins

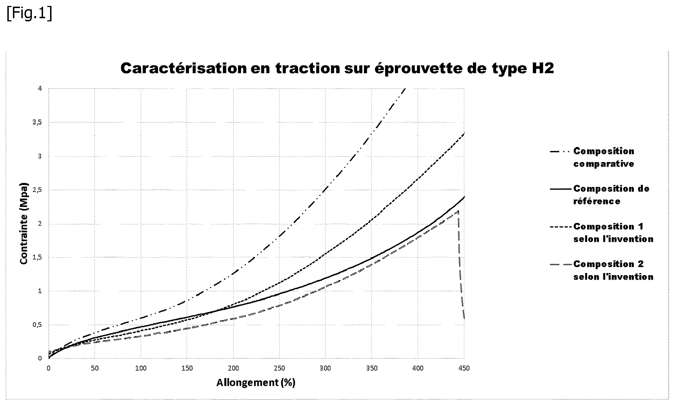

La Figure 1 illustre les performances mécaniques de butées flexibles fabriquées selon le procédé de l'invention, et plus particulièrement leur caractérisation en traction sur éprouvette de type H2, par rapport à des butées flexibles comparative et de référence.

### Description de l'invention

Selon un premier aspect, l'invention concerne un procédé de fabrication d'une butée flexible pour un propulseur comprenant les étapes suivantes :
(i) préparation d'une composition de polysiloxane liquide par mélange de :
   (1) une base polydiméthylsiloxane A ayant un groupe vinyle et un groupe -SiH en bout de chaîne, et une huile polydiméthylsiloxane de formule Si(CH₃)₃-[O-Si(CH₃)₂]ₙ-OSi(CH₃)₃ dans laquelle n varie de 2 à 2 000, avec
   (2) un catalyseur polydiméthylsiloxane B ayant des groupes vinyles en bout de chaîne et un catalyseur au platine,
      la base polydiméthylsiloxane A, l'huile polydiméthylsiloxane, et le catalyseur polydiméthylsiloxane B étant des matériaux polydiméthylsiloxanes différents,
(ii) injection de la composition de polysiloxane liquide obtenue à l'issue de l'étape (i) dans un moule de butée flexible, et
(iii) réticulation à température ambiante de la composition de polysiloxane liquide injectée lors de l'étape (ii).

La partie (1) de la composition de polysiloxane liquide préparée lors de l'étape (i) constitue un pré-mélange. Ce pré-mélange est de préférence obtenu par mélange des composants de la partie (1) dans un mélangeur planétaire. Avantageusement, l'étape de mélange du pré-mélange est réalisée pendant une durée allant de 5 à 30 minutes, et plus avantageusement pendant environ 15 minutes. Le pré-mélange de la partie (1) est ensuite mélangé avec le catalyseur de la partie (2), de préférence dans un mélangeur statique.

Dans certains modes de réalisation, la base polydiméthylsiloxane A a un poids moléculaire allant de 15 000 à 30 000 g.mol⁻¹, de préférence de 17 000 à 28 000 g.mol⁻¹, et plus préférentiellement de 20 000 à 25 000 g.mol⁻¹.

Dans certains modes de réalisation, le catalyseur polydiméthylsiloxane B a un poids moléculaire allant de 10 000 à 30 000 g.mol⁻¹, de préférence de 15 000 à 25 000 g.mol⁻¹, et plus préférentiellement de 18 000 à 22 000 g.mol⁻¹.

L'huile polydiméthylsiloxane répond avantageusement a une formule Si(CH₃)₃-[O-Si(CH₃)₂]ₙ-OSi(CH₃)₃ dans laquelle n varie de 10 à 500, et de préférence de 50 à 200.

Dans certains modes de réalisation, l'huile polydiméthylsiloxane de formule Si(CH₃)₃-[O-Si(CH₃)₂]ₙ-Si(CH₃)₃ a un poids moléculaire allant de 1 000 à 20 000 g.mol⁻¹, de préférence de 3 000 à 12 000 g.mol⁻¹, et plus préférentiellement de 6 000 à 9 000 g.mol⁻¹.

Le ratio en poids entre la base polydiméthylsiloxane A et le catalyseur polydiméthylsiloxane B varie de préférence de 5/1 à 15/1, plus préférentiellement de 8/1 à 12/1, et encore plus préférentiellement est de 10/1.

Dans certains modes de réalisation, la base polydiméthylsiloxane A représente de 50 à 95% en poids, de préférence de 60 à 85% en poids, et plus préférentiellement de 65 à 80% en poids, par rapport au poids total de la composition de polysiloxane liquide préparée lors de l'étape (i).

Dans certains modes de réalisation, le catalyseur polydiméthylsiloxane B représente de 5 à 10% en poids, de préférence de 6 à 10% en poids, et plus préférentiellement de 7 à 9% en poids, par rapport au poids total de la composition de polysiloxane liquide préparée lors de l'étape (i).

Dans certains modes de réalisation, l'huile polydiméthylsiloxane représente de 1 à 50% en poids, de préférence de 10 à 40% en poids, et plus préférentiellement de 20 à 30% en poids, par rapport au poids total de la composition de polysiloxane liquide préparée lors de l'étape (i).

Dans certains modes de réalisation, l'huile polydiméthylsiloxane de formule Si(CH₃)₃-[O-Si(CH₃)₂]ₙ-OSi(CH₃)₃ mise en oeuvre lors de l'étape (i) a une viscosité cinématique allant de 10 à 100 mm².s⁻¹, et de préférence de 30 à 70 mm².s⁻¹, à 25°C.

La composition de polysiloxane liquide préparée lors de l'étape (i) présente avantageusement une viscosité allant de 5 à 18 Pa.s, et encore plus avantageusement allant de 8 à 15 Pa.s, mesurée à température ambiante.

Dans certains modes de réalisation, la composition de polysiloxane liquide mise en oeuvre lors de l'étape (i) comprend dans sa partie (1) un agent retardateur, aussi appelé agent retardateur de cinétique ou agent retardateur de prise.

Dans certains modes de réalisation, l'agent retardateur est choisi parmi les alcools acétyléniques de formule RR'C(OH)-C=CH dans laquelle R est choisi parmi un radical alkyle en C₁-C₂₀ linéaire ou ramifié, ou un radical phényle ; R' est choisi parmi un atome d'hydrogène, un radical alkyle en C₁-C₂₀ linéaire ou ramifié, ou un radical phényle ; les radicaux R et R' pouvant éventuellement former un cycle entre eux. De préférence, l'agent retardateur est choisi parmi l'éthynyl-1-cyclohexanol, le 3-méthylbutyn-1-ol, le méthyl-3-dodécyne-1-ol, le triméthyl-3,7,11-dodécyne-1-ol, le diphényl-1,1-propyne-2-ol, l'éthyl-3-éthyl-6-nonyne-1-ol, le méthyl-3-pentadécyne-1-ol, et leurs mélanges. Dans un mode de réalisation préféré, l'agent retardateur est l'éthynyl-1-cyclohexan-1-ol.

L'agent retardateur représente avantageusement de 0,1 à 5% en poids, de préférence de 0,2 à 3% en poids, et plus préférentiellement de 0,5 à 1% en poids, par rapport au poids total de la composition de polysiloxane liquide préparée lors de l'étape (i).

Dans certains modes de réalisation, la composition mise en oeuvre lors de l'étape (i) comprend dans sa partie (1) un agent opacifiant, et de préférence du noir de carbone.

L'agent opacifiant représente avantageusement de 0,05 à 3% en poids, de préférence de 0,1 à 2% en poids, et plus préférentiellement de 0,2 à 1% en poids, par rapport au poids total de la composition de polysiloxane liquide préparée lors de l'étape (i).

L'étape (iii) de réticulation est réalisée à température ambiante. Au sens de l'invention, on entend par température ambiante une température comprise entre 17 et 23°C, et plus précisément une température d'environ 20°C. Dans certains modes de réalisation, l'étape (iii) de réticulation dure de 24h à 14 jours, de préférence de 3 à 10 jours, et plus préférentiellement 7 jours.

Selon un autre aspect, l'invention concerne une butée flexible pour un propulseur obtenue selon le procédé de l'invention, ladite butée flexible comprenant une composition de polysiloxane durcie comprenant des chaînes de polysiloxane réticulées d'une base polydiméthylsiloxane A ayant un groupe vinyle et un groupe -SiH en bout de chaîne, et d'un catalyseur polydiméthylsiloxane B ayant des groupes vinyles en bout de chaîne.

Dans certains modes de réalisation, la butée flexible pour un propulseur selon l'invention présente une forme annulaire.

Selon un dernier aspect, l'invention concerne un propulseur comprenant un corps prolongé par une tuyère comprenant une butée flexible selon l'invention, ladite butée flexible formant une liaison articulée entre la tuyère et le corps du propulseur.

Outre les dispositions qui précèdent, l'invention comprend encore d'autres dispositions qui ressortiront du complément de description qui suit, qui se rapporte à des exemples de mise en oeuvre du procédé de fabrication d'une butée flexible selon l'invention, et des exemples comparatifs et de référence.

### Exemples

Différentes butées flexibles ont été préparées à partir des compositions figurant au Tableau 1 dans lesquelles le ratio base polydiméthylsiloxane A / catalyseur polydiméthylsiloxane B est égal à 10 (les valeurs indiquées correspondent aux % en poids par rapport au poids total de la composition de polysiloxane) :

**[Tableau 1]**

| **Matières premières** | **Fonctions** | **Composition 1 selon l'invention** | **Composition 2 selon l'invention** | **Composition comparative** |
|---|---|---|---|---|
| BLUESIL^{™} RTV 3131 A (Elkem Silicones) | Base polydiméthylsiloxane A | 76,10 | 66,05 | 89,77 |
| BLUESIL^{™} RTRD PA 40 (BLUESTAR SILICONES) | Agent retardateur | 0,68 | 0,59 | 0,81 |
| Noir de Carbone PRINTEX^{®} XE2B (STOBEC) | Agent opacifiant | 0,38 | 0,33 | 0,45 |
| RHODORSIL^{®} | Huile polydiméthylsiloxane | 15,22 | 26,42 | - |
| HUILES 47 V 50 (BLUESTAR SILICONES) | de poids moléculaire 7 000 - 8 000 g.mol⁻¹ (viscosité : 10 Pa.s à 23°C) | | | |
| BLUESIL^{™} RTV 3131 B (Elkem Silicones) | Catalyseur polydiméthylsiloxane B | 7,61 | 6,61 | 8,98 |

Dans une première étape (i), le BLUESIL^{™} RTV 3131 A (Elkem Silicones), le BLUESIL^{™} RTRD PA 40 (éthynyl-1-cyclohexan-1-ol à 5%) (BLUESTAR SILICONES), le noir de carbone PRINTEX^{®} XE2B, et éventuellement le RHODORSIL^{®} HUILES 47 V 50 (BLUESTAR SILICONES) ont été introduits dans un mélangeur planétaire sous vide, puis mélangé pendant 1 minute à 1 000 tours/min sans vide, puis pendant 4 minutes à 1 000 tours/min sous vide, et enfin pendant 1 minute à 1 000 tours/min sans vide, pour obtenir un pré-mélange. Le catalyseur BLUESIL^{™} RTV 3131 B (Elkem Silicones) préalablement dégazé est ensuite ajouté au pré-mélange (1) dans un mélangeur statique.

Dans une seconde étape (ii), la composition de polysiloxane liquide obtenue à l'issue de l'étape (i) a été injectée dans un moule de butée flexible (moule étanche constitué d'armatures métalliques).

La viscosité mesurée à température ambiante (20°C) des compositions 1 et 2 de l'invention était de 7 Pas.s. Cette viscosité a été mesurée à l'aide d'un rhéomètre hybride Discovery de Texas Instrument, sous une fréquence de cisaillement de 1Hz, et avec un mobile plan/plan de diamètre 40 mm. Mesurée dans les mêmes conditions, la viscosité de la composition comparative était de 20 Pa.s., et de ce fait était beaucoup moins manipulable.

La vie de pot mesurée à température ambiante (20°C) pour les compositions 1 et 2 de l'invention était de 5 heures. Cette vie de pot correspond au temps au-delà duquel la composition durcie, et n'est plus manipulable/injectable. La vie de pot de la composition comparative était également de 5 heures.

Dans une troisième étape (iii), la composition de polysiloxane a été laissée réticuler dans le moule de butée flexible pendant 7 jours à température ambiante (20°C +/- 3°C).

Après réticulation, la butée flexible a été démoulée.

Une butée flexible de référence a également été préparée à partir d'une composition vulcanisable de caoutchouc naturel figurant au Tableau 2 (les valeurs indiquées correspondent aux % en poids par rapport au poids total de la composition) :

**[Tableau 2]**

| **Matières premières** | **Composition de référence** |
|---|---|
| Caoutchouc naturel SVR CV60 (SONG HOANG DAT CO., LTD.) | 66,9 |
| Huile d'hydrocarbure | 20,2 |
| Activateur | 4,8 |
| Charges | 3,4 |
| Agent vulcanisant | 1,0 |
| Accélérateur | 2,2 |
| Retardateur | 1,5 |

Dans une première étape, un mélange a été préparé à partir du caoutchouc naturel, de l'huile d'hydrocarbure, de l'activateur, des charges, de l'accélérateur et du retardateur, puis homogénéisé dans un mélangeur interne, avant transfert dans un mélangeur ouvert.

Le mélange ainsi préparé a ensuite été calandré entre deux rouleaux. En parallèle, un moule de butée flexible (moule chauffant constitué d'armatures métalliques) a été chauffé pour atteindre une température T~200°C.

La viscosité du mélange mesurée à l'aide d'un rhéomètre Monsanto à filière mobile MDR 2000^{™} à une température T~200°C était de 250 Pa.s.

Le mélange a ensuite été injectée par compression sous vide dans le moule de butée flexible à T~200°C monté sur presse, puis vulcanisé par ajout de l'agent vulcanisant.

La butée flexible a ensuite été démoulée.

Les performances des différentes butées flexibles ainsi préparées ont été évaluées, par caractérisation en traction selon le test suivant (suivant la norme NF ISO 37 :2005) :
Des éprouvettes H2 en forme d'haltères de dimensions normalisées (longueur 110 mm, épaisseur : 2 mm) ont été placées entre les deux mors d'un testeur de traction-compression Instron 5565 répondant aux spécifications suivantes :
   - Cellule : Instron 2kN - 415-0322
   - Extensomètre : 70-840-126, L0 = 20 mm
   - Palpeur à touche : FR174906036
   - Vitesse de traverse : 50 mm/min
   - Logiciel de traitement : BlueHill3
Les conditions de réalisation du test sont les suivantes :
   - Vitesse de sollicitation : 50 mm.min⁻¹
   - Température de sollicitation : 20°C
   - Section évaluée : 4 x 2 mm sur une longueur de 25 mm

Les extensomètres ont permis de suivre la dimension de l'éprouvette tout au long de l'essai jusqu'à la rupture.

Les résultats du test en traction obtenus pour chacune des butées flexibles sont présentés dans le Tableau 3 ci-après :

**[Tableau 3]**

| | **Composition de référence** | **Composition 1 selon l'invention** | **Composition 2 selon l'invention** | **Composition comparative** |
|---|---|---|---|---|
| Allongement (%) | 656 | 531 | 487 | 518 |
| C100 (MPa) | 0,48 | 0,39 | 0,33 | 0,72 |
| C200 (MPa) | 0,78 | 0,76 | 0,59 | 1,28 |

C100 correspond à la contrainte à 100% d'allongement (C100).
C200 correspond à la contrainte à 200% d'allongement (C200).

Les résultats obtenus sont représentés sur la Figure 1. Il est observé que les compositions de butées flexibles de l'invention permettent d'atteindre des propriétés mécaniques proches de la composition de butée flexible de référence à base de caoutchouc naturel, en particulier autour de la contrainte à 200% d'allongement (C200). Ainsi, le procédé de l'invention permet d'obtenir des butées flexibles présentant des propriétés mécaniques satisfaisantes, selon un procédé de fabrication beaucoup plus simple, et ce sans avoir à chauffer la composition de polysiloxane liquide pour permettre sa réticulation, les butées flexibles étant fabriquées à température ambiante.

## Revendications

1. Procédé de fabrication d'une butée flexible pour un propulseur comprenant les étapes suivantes :
(i) préparation d'une composition de polysiloxane liquide par mélange de :
(1) une base polydiméthylsiloxane A ayant un groupe vinyle et un groupe -SiH en bout de chaîne, et une huile polydiméthylsiloxane de formule Si(CH₃)₃-[O-Si(CH₃)₂]ₙ-O-Si(CH₃)₃ dans laquelle n varie de 2 à 2 000, avec
(2) un catalyseur polydiméthylsiloxane B ayant des groupes vinyles en bout de chaîne et un catalyseur au platine,
la base polydiméthylsiloxane A, l'huile polydiméthylsiloxane, et le catalyseur polydiméthylsiloxane B étant des matériaux polydiméthylsiloxanes différents,
(ii) injection de la composition de polysiloxane liquide obtenue à l'issue de l'étape (i) dans un moule de butée flexible, et
(iii) réticulation à température ambiante de la composition de polysiloxane liquide injectée lors de l'étape (ii).

2. Procédé selon la revendication 1, **caractérisé en ce que** la base polydiméthylsiloxane A a un poids moléculaire allant de 15 000 à 30 000 g.mol⁻¹, de préférence de 17 000 à 28 000 g.mol⁻¹, et plus préférentiellement de 20 000 à 25 000 g.mol⁻¹.

3. Procédé selon la revendication 1 ou la revendication 2, **caractérisé en ce que** le catalyseur polydiméthylsiloxane B a un poids moléculaire allant de 10 000 à 30 000 g.mol⁻¹, de préférence de 15 000 à 25 000 g.mol⁻¹, et plus préférentiellement de 18 000 à 22 000 g.mol⁻¹.

4. Procédé selon l'une des revendications 1 à 3, **caractérisé en ce que** l'huile polydiméthylsiloxane a une formule Si(CH₃)₃-[O-Si(CH₃)₂]ₙ-O-Si(CH₃)₃ dans laquelle n varie de 10 à 500, et de préférence de 50 à 200.

5. Procédé selon l'une des revendications 1 à 4, **caractérisé en ce que** l'huile polydiméthylsiloxane de formule Si(CH₃)₃-[O-Si(CH₃)₂]ₙ-O-Si(CH₃)₃ a un poids moléculaire allant de 1 000 à 20 000 g.mol⁻¹, de préférence de 3 000 à 12 000 g.mol⁻¹, et plus préférentiellement de 6 000 à 9 000 g.mol⁻¹.

6. Procédé selon l'une des revendications 1 à 5, **caractérisé en ce que** le ratio en poids entre la base polydiméthylsiloxane A et le catalyseur polydiméthylsiloxane B varie de 5/1 à 15/1, de préférence de 8/1 à 12/1, et plus préférentiellement est de 10/1.

7. Procédé selon l'une des revendications 1 à 6, **caractérisé en ce que** la base polydiméthylsiloxane A représente de 50 à 95% en poids, de préférence de 60 à 85% en poids, et plus préférentiellement de 65 à 80% en poids, par rapport au poids total de la composition de polysiloxane liquide préparée lors de l'étape (i).

8. Procédé selon l'une des revendications 1 à 7, **caractérisé en ce que** le catalyseur polydiméthylsiloxane B représente de 5 à 10% en poids, de préférence de 6 à 10% en poids, et plus préférentiellement de 7 à 9% en poids, par rapport au poids total de la composition de polysiloxane liquide préparée lors de l'étape (i).

9. Procédé selon l'une des revendications 1 à 8, **caractérisé en ce que** l'huile polydiméthylsiloxane représente de 1 à 50% en poids, de préférence de 10 à 40% en poids, et plus préférentiellement de 20 à 30% en poids, par rapport au poids total de la composition de polysiloxane liquide préparée lors de l'étape (i).

10. Procédé selon l'une des revendications 1 à 9, **caractérisé en ce que** la composition de polysiloxane liquide préparée lors de l'étape (i) a une viscosité allant de 5 à 18 Pa.s, et de préférence de 8 à 15 Pa.s, mesurée à température ambiante.

11. Procédé selon l'une des revendications 1 à 10, **caractérisé en ce que** la composition de polysiloxane liquide mise en oeuvre lors de l'étape (i) comprend dans sa partie (1) un agent retardateur ; de préférence choisi parmi les alcools acétyléniques de formule RR'C(OH)-C=CH dans laquelle R est choisi parmi un radical alkyle en C₁-C₂₀ linéaire ou ramifié, ou un radical phényle ; R' est choisi parmi un atome d'hydrogène, un radical alkyle en C₁-C₂₀ linéaire ou ramifié, ou un radical phényle ; les radicaux R et R' pouvant éventuellement former entre eux un cycle ; et plus préférentiellement choisi parmi l'éthynyl-1-cyclohexanol, le 3-méthylbutyn-1-ol, le méthyl-3-dodécyne-1-ol, le triméthyl-3,7,11-dodécyne-1-ol, le diphényl-1,1-propyne-2-ol, l'éthyl-3-éthyl-6-nonyne-1-ol, le méthyl-3-pentadécyne-1-ol, et leurs mélanges ; l'éthynyl-1-cyclohexan-1-ol étant l'agent retardateur préféré.

12. Procédé selon la revendication 11, **caractérisé en ce que** l'agent retardateur représente de 0,1 à 5% en poids, de préférence de 0,2 à 3% en poids, et plus préférentiellement de 0,5 à 1% en poids, par rapport au poids total de la composition de polysiloxane liquide préparée lors de l'étape (i)

13. Procédé selon l'une des revendications 1 à 12, **caractérisé en ce que** la composition mise en oeuvre lors de l'étape (i) comprend dans sa partie (1) un agent opacifiant, et de préférence du noir de carbone.

14. Procédé selon la revendication 13, **caractérisé en ce que** l'agent opacifiant représente de 0,05 à 3% en poids, de préférence de 0,1 à 2% en poids, et plus préférentiellement de 0,2 à 1% en poids, par rapport au poids total de la composition de polysiloxane liquide préparée lors de l'étape (i).

15. Procédé selon l'une des revendications 1 à 14, **caractérisé en ce que** l'étape (iii) de réticulation à température ambiante dure de 24h à 14 jours, de préférence de 3 à 10 jours, et plus préférentiellement 7 jours.

16. Butée flexible pour un propulseur obtenue selon le procédé des revendications 1 à 15, **caractérisée en ce qu'**elle comprend une composition de polysiloxane durcie comprenant des chaînes de polysiloxane réticulées d'une base polydiméthylsiloxane A ayant un groupe vinyle et un groupe -SiH en bout de chaîne, et d'un catalyseur polydiméthylsiloxane B ayant des groupes vinyles en bout de chaîne.

17. Propulseur comprenant un corps prolongé par une tuyère, **caractérisé en ce qu'**il comprend une butée flexible selon la revendication 16, ladite butée flexible formant une liaison articulée entre la tuyère et le corps du propulseur.
